# FASCICULE DE BREVET EUROPEEN

(11) **EP 3 820 684 B1**
(45) Date de publication et mention de la délivrance du brevet: **08.10.2025**
(21) Numéro de dépôt: 19797773.9
(22) Date de dépôt: 30.08.2019
(51) Int. Cl.: B29C 70/74, B29C 70/76, B29C 70/78, B29C 70/88, B29C 73/04, B29C 73/10, B29D 99/00, F01D 5/28, B29C 70/54, B29C 70/68, B29C 70/02

(54) **AUBE EN MATÉRIAU COMPOSITE A FILM ANTI-ÉROSION RENFORCE ET PROCÉDÉ DE PROTECTION ASSOCIÉ**
SCHAUFEL AUS VERBUNDWERKSTOFF MIT VERBESSERTER EROSIONSSCHUTZFOLIE UND ZUGEHÖRIGES SCHUTZVERFAHREN
BLADE MADE OF COMPOSITE MATERIAL AND HAVING AN ENHANCED EROSION PROTECTION FILM, AND ASSOCIATED PROTECTION METHOD

(30) Priorité: 31.08.2018 FR 1857853
(43) Date de publication de la demande: 19.05.2021
(73) Titulaire: SAFRAN AIRCRAFT ENGINES, 75015 Paris (FR)
(72) Inventeur: CHARLAS, Mathieu, Julien, 77550 Moissy-Cramayel (FR); BAJULAZ, Mehdi, 77550 Moissy-Cramayel (FR); ALU, Alexandre, 77550 Moissy-Cramayel (FR)
(74) Mandataire: Brevalex
(86) Numéro de dépôt international: PCT/FR2019/052004
(87) Numéro de publication internationale: WO 2020/043996

(56) Documents cités:
- EP-A1- 3 345 752
- DE-C1- 19 627 860
- US-A1- 2012 163 981

## Description

### DOMAINE TECHNIQUE

La présente invention concerne une aube en matériau composite ayant un film anti-érosion renforcé à proximité du sommet d'aube, ainsi qu'un procédé de protection d'une aube en matériau composite. L'invention se rapporte en particulier à une aube de soufflante pour une turbomachine, notamment un turboréacteur.

### ÉTAT DE LA TECHNIQUE ANTÉRIEURE

Dans le domaine aéronautique, une turbomachine est généralement constituée d'une partie dite froide, comprenant un compresseur et une turbine basse pression, et d'une partie dite chaude, comprenant un compresseur et une turbine haute pression. En amont du compresseur basse pression se trouve une soufflante, qui est une structure constituée d'un rotor composé d'aubes de grandes dimensions et à larges cordes, et d'un stator composé d'un carter de soufflante. On précise que le terme « amont » est considéré selon la direction d'écoulement principale des gaz au sein de la turbomachine.

Dans une turbomachine où le gain de masse est souvent activement recherché, les matériaux composites sont souvent utilisés pour la réalisation de pièces, notamment sur la partie dite froide, plus précisément sur la soufflante basse pression, puisque les niveaux de température sont les plus propices à l'usage de matériaux composites à matrice organique. C'est ainsi que les dernières générations de soufflantes basse pression ont été développées en matériau composite, notamment les aubes de soufflante.

Par rapport aux aubes traditionnelles en titane (TA6V), les aubes en matériau composite apportent d'excellentes propriétés mécaniques en fonctionnement et un gain de masse considérables pour la turbomachine. La résistance thermomécanique de ces aubes doit cependant être renforcée par l'application de différentes protections.

Ces aubes composites doivent en effet répondre à différentes types de sollicitations de fonctionnement et doivent notamment assurer une tenue aux chocs (type ingestion, corps étrangers, érosion, etc.). Cette tenue aux chocs est couramment assurée par l'application, aux endroits sensibles aux chocs, de pièces métalliques (par exemple, il est fréquent d'utiliser un bord de protection métallique (généralement appelé bouclier ou clinquant), collé sur le bord d'attaque de l'aube), d'un revêtement en tissu PTFE et/ou de protections contre l'érosion (peintures, film en polyuréthane).

US 2012/163981, qui divulgue le préambule de la revendication 1, décrit une aube dont le bord d'attaque est protégé par un revêtement élastomère multicouches composé d'une couche adhésive, d'une couche de base et d'une couche supérieure.

Ces aubes composites doivent également assurer une résistance aux usures de type contact avec l'abradable du carter de soufflante. On rappelle en effet que, pour optimiser des jeux de fonctionnement entre les aubes et le carter de soufflante, ce dernier est recouvert d'une couche d'un matériau dit « abradable », généralement composé d'un mélange de résine époxyde et de billes de verre micrométriques. Lors du fonctionnement du moteur de la turbomachine, les aubes peuvent frotter contre ce matériau abradable, afin d'optimiser les jeux en tout point du carter. Cependant, un tel contact conduit à un auto-échauffement des aubes, amenant à des dégradations hyper localisées, mais irréversibles, du composite, ce qui altère les propriétés mécaniques des aubes. Ces propriété se trouvent altérées notamment lorsque les aubes de soufflantes sont mises en rotation à haut régime.

Ainsi, la protection à l'usure des sommets d'aube de soufflante en composite s'avère cruciale, d'autant plus que les motoristes cherchent continument à accroitre les performances moteurs en réduisant les jeux de fonctionnement, notamment les jeux en sommet d'aube de soufflante, augmentant ainsi les occurrences de contacts par frottement.

La résistance aux usures de type contact avec l'abradable du carter de soufflante est couramment assurée par des clinquants métalliques disposés en sommet d'aube de soufflante et recouvrant totalement le sommet d'aube.

Cependant, l'utilisation de clinquants métalliques a l'inconvénient d'introduire de la masse additionnelle non négligeable sur l'aube de soufflante, ce qui induit un impact sur le chargement centrifuge de l'aube de soufflante et donc sur la durée de vie du disque de soufflante et sur les performances de la turbomachine.

C'est la raison pour laquelle les dernières générations d'aubes de soufflante en matériau composite à matrice organique ne comportent pas de clinquants métalliques en sommet d'aube. Cette conception les rend plus vulnérables aux dégradations par contact avec l'abradable du carter de soufflante. En particulier, l'auto-échauffement provoqué par les contacts affecte la partie intrados de l'aube, du fait du déplacement du sommet d'aube en fonctionnement, et plus particulièrement il affecte la ou les protections disposée(s) sur l'aube pour améliorer sa tenue à l'érosion. Par exemple, sous l'effet de l'échauffement, un film de protection anti-érosion en polymère thermoplastique (par exemple un film en polyuréthane), collé sur l'intrados de l'aube, aura la possibilité de fluer à des températures supérieures à 200°C et lorsqu'il est soumis à d'importants efforts centrifuges. Il en résulte donc qu'en service, des morceaux de ce film anti-érosion peuvent être centrifugés et se détacher de l'aube, ce qui entraîne la dégradation de la protection à l'érosion du composite de l'aube et par conséquent remet en question la durée de vie de l'aube.

La présente invention vise à fournir une solution alternative aux clinquants métalliques. Plus particulièrement, l'invention vise à permettre de protéger le sommet d'une aube en matériau composite à matrice organique des contacts de frottement, sans avoir à utiliser de clinquants métalliques.

### EXPOSÉ DE L'INVENTION

Pour ce faire, l'invention a pour objet une aube de turbomachine telle que définie dans la revendication 1.

On entend par film de protection contre l'érosion (ou film anti-érosion) un revêtement qui résiste à l'érosion et qui, en recouvrant une zone du corps d'aube, la protège contre l'érosion en améliorant la résistance de cette zone au phénomène d'érosion.

De préférence, l'aube est une aube de soufflante.

On rappelle qu'un polymère (ou résine) thermoplastique est constitué de chaînes linéaires ou ramifiées à liaisons covalentes, ces chaînes étant liées entre elles par des liaisons faibles de type Van der Waals ou hydrogène. Un polymère (ou résine) thermodurcissable est constitué de chaînes linéaires réticulées entre elles, les chaines étant liées dans l'espace par des liaisons fortes de type covalent. Un polymère thermodurcissable devient solide de manière irréversible, contrairement au polymère thermoplastique, qui se ramollit lorsqu'il est chauffé au-dessus d'une température donnée.

Cette couche de renfort vient renforcer l'aptitude du film anti-érosion à résister aux contacts avec l'abradable du carter.

L'invention a également pour objet un procédé de protection contre l'érosion d'une aube de turbomachine tels que définis dans la revendication 2.

L'application d'une peinture anti-érosion est une étape connue ; la peinture anti-érosion est généralement choisie parmi des résines de formulation polyuréthane thermodurcissable, souvent associées à des élastomères de polyuréthane thermoplastiques. Le ratio entre la partie thermodurcissable et la partie thermoplastique permet de trouver un compromis entre comportement anti-érosion et la résistance au gravillonnage. Ces peintures polyuréthane dites de finition sont généralement associées à des primaires formulés sur des bases époxydes.

Selon un mode de réalisation du procédé selon l'invention, l'aube est une aube à réparer comprenant un film endommagé de protection contre l'érosion en un polymère thermoplastique, collé sur le corps d'aube, dont au moins une portion située à proximité du sommet du corps d'aube est endommagée, et l'étape a) est précédée d'une opération de retrait d'au moins la portion endommagée du film endommagé de protection.

Ce mode de réalisation du procédé selon l'invention permet de mettre au point une solution de réparation d'une aube en matériau composite dont le film anti-érosion est endommagé, afin de la remettre en conformité avec la définition certifiée.

Selon une variante de ce mode de réalisation, l'aube à réparer étant recouverte d'une couche de peinture anti-érosion, le procédé comprend en outre, avant l'opération de retrait de ladite au moins une portion endommagée du film endommagé de protection, une opération de retrait de cette couche de peinture anti-érosion.

Certains aspects préférés mais non limitatifs de l'aube et du procédé de protection selon l'invention sont les suivants :
- le film de protection est collé sur le corps de l'aube à l'aide d'une couche en un polymère thermodurcissable qui est identique au polymère thermodurcissable de la couche de renfort ;
- le polymère thermodurcissable de la couche de renfort est identique au polymère thermodurcissable formant la matrice organique de.

L'invention concerne enfin une turbomachine comprenant une soufflante comportant une pluralité d'aubes selon l'invention.

La solution proposée par l'invention permet de s'affranchir d'un clinquant métallique pour protéger l'intégrité du sommet d'une aube en matériau composite, par l'ajout d'une couche de renfort en polymère thermodurcissable, de préférence de type bande, disposé le long de la tête d'aube afin de limiter le fluage du film anti-érosion en polymère thermoplastique présent sur l'intrados et son arrachement.

### BRÈVE DESCRIPTION DES DESSINS

D'autres avantages et caractéristiques de l'invention apparaîtront mieux à la lecture de la description détaillée suivante de formes de réalisation préférées de celle-ci, donnée à titre d'exemple non limitatif, et faite en référence aux dessins annexés parmi lesquels :
- la figure 1 est une vue schématique en coupe axiale d'un turboréacteur à double flux ;
- les figures 2a à 2d représentent les étapes d'un mode de réalisation du procédé de protection selon l'invention ;
- la figure 3 est une vue schématique en coupe selon la direction I-I de la figure 2d montrant un exemple de la disposition des différents éléments sur le corps d'aube ;
- les figures 4a à 4d représentent les étapes d'un autre mode de réalisation du procédé de protection selon l'invention.

### EXPOSÉ DÉTAILLÉ DE MODES DE RÉALISATION PARTICULIERS

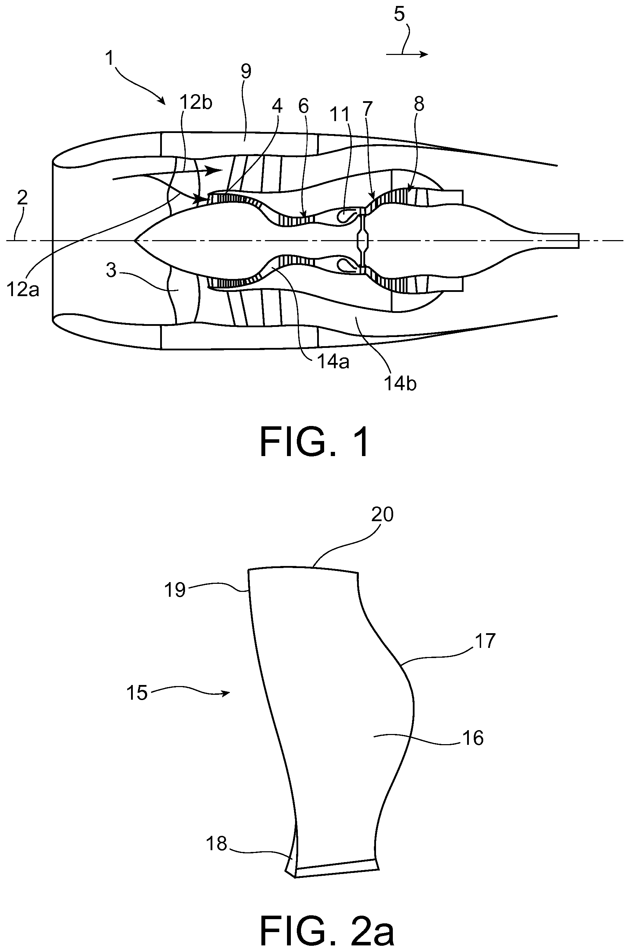

En référence à la figure 1, il est représenté une turbomachine 1, qui présente un axe central longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

En référence à la figure 2a est représenté un exemple d'un corps d'aube 15 en matériau composite pour soufflante de turbomachine. Le corps d'aube 15 comporte notamment un intrados 16, un extrados (non visible sur la figure), un bord d'attaque 17, un pied 18, une tête 19, un sommet 20. Le corps d'aube 15 est constitué de fibres ou de filaments liés entre eux par une résine thermodurcissable, par exemple une résine époxyde. Les filaments ou fibres peuvent être en carbone ou bien en verre, silice, carbure de silicium, alumine, etc. Le corps d'aube peut par exemple être obtenu par injection RTM (pour « Resin Transfer Moulding » en anglais) d'une préforme tissée 3D.

Les endroits sensibles à l'érosion et/ou aux impacts de ce corps d'aube doivent être protégés, notamment le bord d'attaque 17, protégé de manière connue à l'aide d'un bouclier métallique 21, et l'intrados 16, à l'aide d'un film anti-érosion 22 en polymère thermoplastique, généralement un film en polyuréthane, qui est collé sur l'intrados pour le renforcer. Le fait d'utiliser un film thermoplastique permet au film d'être suffisamment malléable pour épouser la forme tridimensionnelle du corps de l'aube. Mais, en contrepartie, ce film présente de mauvaises propriétés mécaniques de tenue au fluage.

La solution technique proposée par l'invention est d'augmenter la tenue au fluage du film anti-érosion 22 en polymère thermoplastique, au moins dans sa portion située à proximité du sommet 20 d'aube, en recouvrant cette portion du film 22 d'une couche de renfort 23 par l'application d'un polymère thermodurcissable en couche mince. De préférence, le polymère thermodurcissable en couche mince se présente sous la forme d'une bande, ce qui permet d'avoir le résultat escompté de maintien du film anti-érosion 22 et d'augmentation de sa tenue au fluage, tout en déposant une quantité minimale de polymère thermodurcissable afin de ne pas augmenter inutilement le poids de l'aube.

Les étapes du procédé de protection selon l'invention vont être décrites en détails.

On fournit un corps d'aube 15 en matériau composite à matrice organique (CMO) (figure 2a).

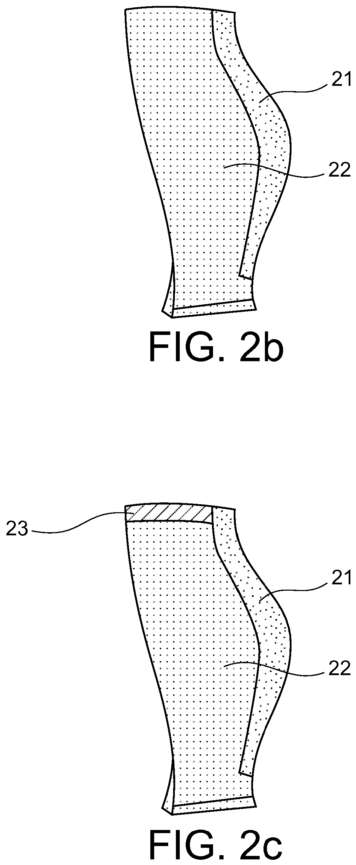

On procède à l'assemblage du bouclier métallique 21 du bord d'attaque 17 et du film anti-érosion 22 (généralement un film de polyuréthane) sur le corps d'aube 15 (figure 2b) ; l'assemblage peut se faire par collage, par exemple en appliquant une couche d'adhésif 24 en polymère thermodurcissable choisi parmi des adhésifs de type époxyde, polyester, ou autre, sous forme de film ou de pâte, avec ou sans support, sur le corps d'aube avant d'y appliquer le bouclier métallique et le film anti-érosion. On procède ensuite à la cuisson, par exemple en autoclave, pendant 3 heures à 150°C.

On place une bande d'un polymère thermodurcissable en sommet du corps d'aube, sur le côté intrados, de manière à ce que la bande recouvre le film anti-érosion (figure 2c). Cette bande va servir de couche de renfort 23.

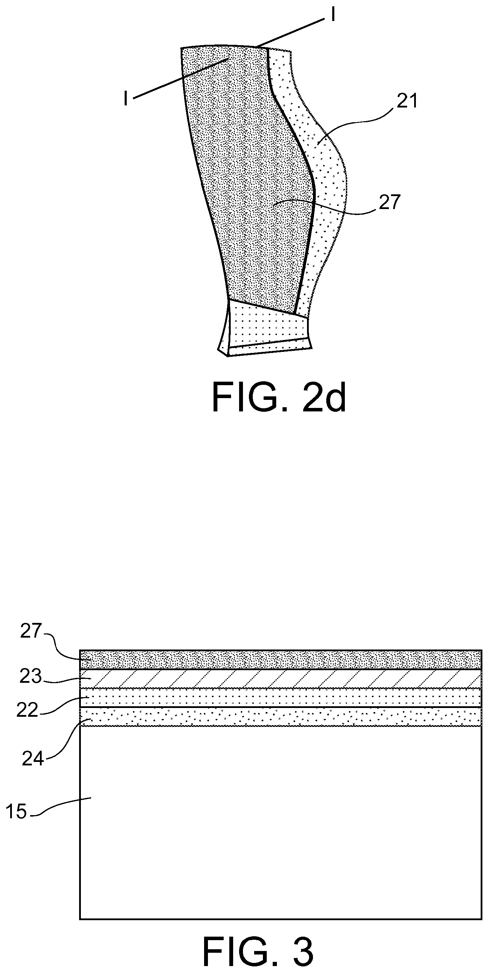

Avantageusement, on termine la protection du corps d'aube en appliquant une peinture anti-érosion 27 sur l'ensemble du corps d'aube, à l'exception du bouclier 21 de bord d'attaque, de la tranche supérieure de l'aube et du pied 18 (figure 2d).

Selon un mode de réalisation préféré de l'invention, on obtient une aube ayant un film 22 en polyuréthane collé sur l'intrados 16 du corps d'aube à l'aide d'un adhésif, l'ensemble formé du film et de son adhésif ayant une épaisseur de 0,4 mm, un bouclier 21 métallique disposé sur le bord d'attaque 17 du corps d'aube 15, et une épaisseur de peinture anti-érosion 27 d'environ 0,1 mm déposée sur l'ensemble du corps d'aube, notamment sur les parties intrados et extrados, à l'exception du bouclier 21 métallique, de la tranche supérieure de l'aube (i.e. son sommet 20), car celle-ci n'est pas soumise à l'érosion, et du pied 18.

Comme illustré dans la figure 3, on obtient, selon une vue en coupe, une structure multicouche à proximité du sommet 20 de l'aube. En effet, le film anti-érosion 22 en polymère thermoplastique (film en polyuréthane) se trouve pris en sandwich entre deux polymères thermodurcissables, à savoir la couche d'adhésif 24 utilisée pour le collage du film anti-érosion sur le corps d'aube et la couche de renfort 23 de type bande, rapportée en sommet du corps d'aube, ce qui a pour effet d'améliorer significativement la tenue au fluage du film anti-érosion en limitant ses déplacements par un apport de rigidité et ce qui limite aussi les risques d'arrachement du film anti-érosion suite à un contact du sommet 20 d'aube avec le matériau abradable du carter de soufflante.

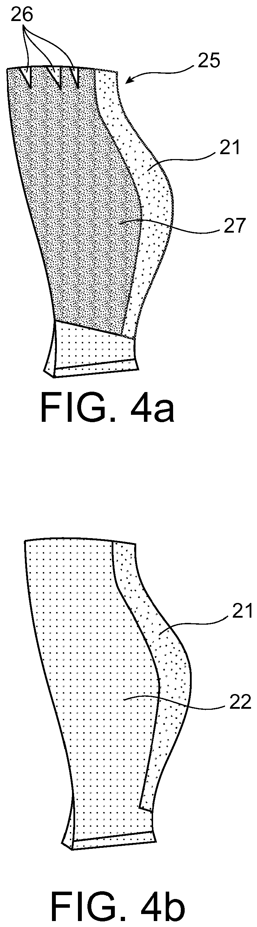

Le procédé selon l'invention peut également être utilisé pour réparer une aube de soufflante en matériau composite dont le sommet, non protégé contre les contacts avec l'abradable, a été endommagé (aube à réparer 25). Comme illustré dans la figure 4a, cette aube à réparer 25 présente une usure en sommet d'aube se présentant sous la forme d'une peinture anti-érosion écaillée, laissant apparaitre un film anti-érosion endommagé 26.

On procède au retrait partiel ou total de la peinture anti-érosion 27, par exemple par un procédé de décapage, par exemple par ponçage manuel, de manière à au moins supprimer la peinture anti-érosion dans la zone endommagée du film anti-érosion endommagé 26 (principalement localisée près du sommet de l'aube).

On reconditionne ensuite le film anti-érosion endommagé 26. Pour cela, on procède au retrait partiel ou total du film anti-érosion endommagé 26, de manière à supprimer la partie endommagée de ce film anti-érosion endommagé et on réapplique un nouveau film anti-érosion 22 sur le corps d'aube (figure 4b).

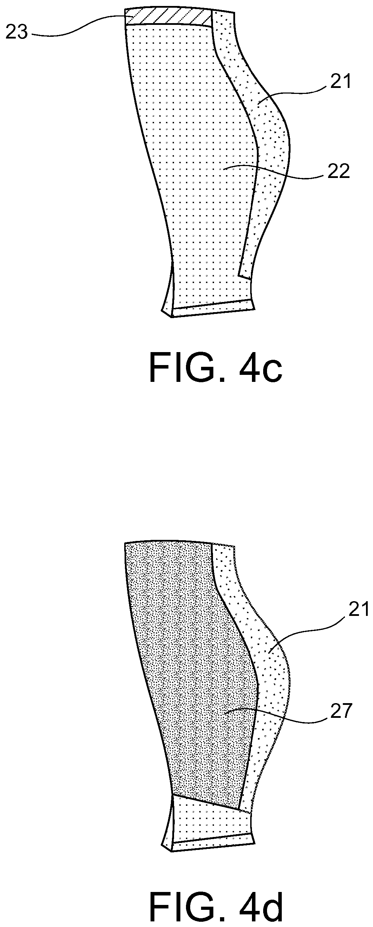

On met en place, en sommet d'aube sur la paroi d'intrados 16, une couche de renfort 23 en polymère thermodurcissable sous forme de bande (figure 4c), qui est disposée de manière à ce qu'elle recouvre le nouveau film anti-érosion 22, et on procède à la cuisson, par exemple en autoclave, en appliquant par exemple les mêmes paramètres que ceux du cycle d'assemblage du bord d'attaque et du film anti-érosion (3 heures à 150°C).

Enfin, avantageusement, on applique la peinture anti-érosion 27 (figure 4d). On peut, par exemple, appliquer un primaire pour peinture de finition ; puis procéder à la cuisson du primaire (par exemple, à 80°C pendant 30 minutes) ; puis, appliquer la peinture anti-érosion sur le primaire, et procéder à la cuisson en autoclave (par exemple, 80°C pendant 60 minutes).

On rappelle que la maîtrise de l'épaisseur des pales d'aubes de soufflante est primordiale, car elle est directement liée aux performances du moteur. De manière similaire, il est de rigueur sur les turbomachines de veille à ne pas déployer de solution coûteuse en termes de masse, de façon à ne pas dégrader les performances de la turbomachine. Ainsi, la solution apportée, que ce soit lors de la protection d'une aube neuve ou lors de protection d'une aube endommagée (et donc à sa réparation), doit garantir un niveau de performance acceptable et pérenne en termes de maitrise d'épaisseur. En l'occurrence, la solution technique proposée par l'invention permet de satisfaire à ce critère de maitrise de l'épaisseur en introduisant une couche de polymère thermodurcissable d'épaisseur contrôlable. De préférence, on déposera une couche de polymère thermodurcissable ayant une épaisseur comprise entre 0,05 et 0,15 mm (bornes comprises). Cette application est localisée en sommet d'aube, de préférence uniquement sur le sommet d'aube côté intrados, garantissant une augmentation de masse négligeable de l'aube de soufflante contrairement aux solutions actuelles visant à introduire un clinquant métallique en sommet d'aube.

En ce qui concerne le choix du polymère thermodurcissable de la couche de renfort, il doit prendre en compte différents paramètres intrinsèques à l'aube de soufflante.

Tout d'abord, le polymère thermodurcissable choisi pour la couche de renfort doit pouvoir réticuler lors d'une cuisson ne remettant pas en cause les propriétés mécaniques du corps d'aube de soufflante. Pour un corps d'aube de soufflante réalisée en matériau composite à matrice époxyde renforcée par des fibres de carbone, le choix peut se porter sur des polymères de type époxyde dont les propriétés permettent de réticuler à niveau de température équivalent à la température de polymérisation du polymère formant la matrice du corps d'aube. Parmi les polymères époxydes disponibles sur le marché, les polymérisations vont de 70°C à théoriquement 250°C. Il est à noter que pour une utilisation sur une aube de soufflante LEAP, réalisée en matériau composite à matrice époxyde renforcée par des fibres de carbone, on se limite, par mesure de précaution, à des polymères époxydes ayant une température maximale de polymérisation de 150°C, pour respecter la santé matière du composite. Par exemple, on peut choisir un polymère de type AF191 de chez 3M, qui polymérise autour de 150°C.

De préférence, le temps dédié à la protection d'une aube, que ce soit sur une aube neuve ou sur une aube endommagée, doit être minimal. Ainsi, le matériau du polymère thermodurcissable de la couche de renfort sera de préférence choisi de manière à ce que sa réticulation ne nécessite pas de cycle de cuisson trop long. L'utilisation du même polymère thermodurcissable que celui utilisé pour le collage du bouclier métallique du bord d'attaque ou que celui utilisé pour le collage du film anti-érosion (qui peut être le même que celui utilisé pour le collage du bouclier) permet de limiter l'impact sur le temps dédié à la protection de l'aube.

Enfin, le choix du polymère thermodurcissable de la couche de renfort ne doit pas remettre en cause la tenue de l'aube de soufflante aux fluides présents dans l'environnement moteur (le liquide hydraulique Skydrol^{™}, l'huile moteur, etc.). C'est la raison pour laquelle on privilégie l'utilisation d'un polymère thermodurcissable déjà présent sur l'aube de soufflante pour d'autres applications (comme le collage du bord d'attaque métallique par exemple et/ou le collage du film anti-érosion), car le polymère thermodurcissable choisi est alors déjà qualifié pour la tenue aux fluides.

Ainsi, la solution proposée par l'invention, à savoir l'application d'un polymère thermodurcissable en couche mince disposé en sommet d'aube à cheval sur le film anti-érosion en polymère thermoplastique et sur le corps d'aube, permet d'améliorer la tenue de ce film anti-érosion, que ce soit lors de la protection d'une aube neuve ou endommagée, sans avoir à utiliser de clinquant métallique.

## Revendications

1. Aube de turbomachine, comprenant :
- un corps d'aube (15) en matériau composite à matrice organique renforcée par des fibres, le corps d'aube ayant un intrados (16) et une tête (19) munie d'un sommet (20) ;
- un film (22) de protection contre l'érosion en un polymère thermoplastique, collé sur le corps d'aube ;
l'aube comprend en outre, sur sa tête (19), une couche de renfort (23) en un polymère thermodurcissable, positionnée sur le film (22) de protection contre l'érosion, **caractérisée en ce que** le polymère thermodurcissable de la couche de renfort étant une résine époxyde, et tel que la couche de renfort (23) s'étend le long du sommet (20) sous forme de bande et dans lequel le film (22) de protection et la couche de renfort (23) sont disposés uniquement du côté intrados (16) du corps d'aube.

2. Procédé de protection contre l'érosion d'une aube de turbomachine, l'aube comprenant un corps d'aube (15) en matériau composite à matrice organique renforcée par des fibres, le corps ayant un intrados (16) et une tête (19) munie d'un sommet (20), le procédé comprenant les étapes successives suivantes :
a) l'assemblage, par exemple par collage, d'un film (22) de protection contre l'érosion en un polymère thermoplastique sur le corps d'aube ;
b) l'application d'une couche de renfort (23) en un polymère thermodurcissable sur la tête (19) du corps d'aube, de manière à ce qu'elle soit positionnée sur le film (22) de protection, le polymère thermodurcissable de la couche de renfort étant une résine époxyde, et tel que la couche de renfort (23) s'étend le long du sommet (20) sous forme de bande et dans lequel le film (22) de protection et la couche de renfort (23) sont disposés uniquement du côté intrados (16) du corps d'aube ;
c) l'application éventuelle d'une couche de peinture anti-érosion (27) sur le corps d'aube, de manière à recouvrir le film (22) de protection et la couche de renfort (23).

3. Procédé selon la revendication 2, dans lequel l'aube est une aube à réparer (25) comprenant un film endommagé (26) de protection contre l'érosion en un polymère thermoplastique, collé sur le corps d'aube, dont au moins une portion située à proximité du sommet (20) du corps d'aube est endommagée, et dans lequel l'étape a) est précédée d'une opération de retrait d'au moins la portion endommagée du film endommagé (26) de protection.

4. Procédé selon la revendication 3, dans lequel l'aube à réparer étant recouverte d'une couche de peinture anti-érosion, le procédé comprend en outre, avant l'opération de retrait de ladite au moins une portion endommagée du film endommagé de protection, une opération de retrait de cette couche de peinture anti-érosion.

5. Aube selon la revendication 1, ou procédé de protection selon l'une quelconque des revendications 2 à 4, dans lequel le film de protection est collé sur le corps de l'aube à l'aide d'une couche en un polymère thermodurcissable qui est identique au polymère thermodurcissable de la couche de renfort.

6. Aube selon la revendication 1 ou 5, ou procédé de protection selon l'une quelconque des revendications 2 à 4, dans lequel le polymère thermodurcissable de la couche de renfort est identique au polymère thermodurcissable formant la matrice organique de l'aube.

7. Turbomachine comprenant une soufflante comportant une pluralité d'aubes selon l'une quelconque des revendications 1, 5 et 6.

## Patentansprüche

1. Turbomaschinenschaufel, umfassend:
- einen Schaufelkörper (15) aus einem Faserverbundwerkstoff mit faserverstärkter organischer Matrix, wobei der Schaufelkörper eine Saugseite (16) und einen Kopf (19) mit einer Spitze (20) aufweist;
- eine Erosionsschutzfolie (22) aus einem thermoplastischen Polymer, die auf den Schaufelkörper geklebt ist;
die Schaufel ferner auf ihrem Kopf (19) eine Verstärkungsschicht (23) aus einem duroplastischen Polymer umfasst, die auf der Erosionsschutzfolie (22) positioniert ist, **dadurch gekennzeichnet, dass** das duroplastische Polymer der Verstärkungsschicht ein Epoxidharz ist, und dass sich die Verstärkungsschicht (23) entlang der Spitze (20) in Form eines Bandes erstreckt und wobei die Schutzfolie (22) und die Verstärkungsschicht (23) nur auf der Saugseite (16) des Schaufelkörpers angeordnet sind.

2. Verfahren zum Schutz einer Turbomaschinenschaufel vor Erosion, wobei die Schaufel einen Schaufelkörper (15) aus einem Verbundwerktstoff mit faserverstärkter organischer Matrix umfasst, wobei der Körper eine Saugseite (16) und einen Kopf (19) mit einer Spitze (20) aufweist, wobei das Verfahren die folgenden aufeinanderfolgenden Schritte umfasst:
a) Zusammenfügen, beispielsweise durch Kleben, einer Erosionsschutzfolie (22) aus einem thermoplastischen Polymer auf den Schaufelkörper;
b) Auftragen einer Verstärkungsschicht (23) aus einem duroplastischen Polymer auf den Kopf (19) des Schaufelkörpers, so dass sie auf der Schutzfolie (22) positioniert ist, wobei das duroplastische Polymer der Verstärkungsschicht ein Epoxidharz ist, und so, dass sich die Verstärkungsschicht (23) entlang der Spitze (20) in Form eines Bandes erstreckt und wobei die Schutzfolie (22) und die Verstärkungsschicht (23) nur auf der Saugseite (16) des Schaufelkörpers angeordnet sind;
c) das eventuelle Auftragen einer Schicht aus Erosionsschutzfarbe (27) auf den Schaufelkörper, so dass die Schutzfolie (22) und die Verstärkungsschicht (23) bedeckt sind.

3. Verfahren nach Anspruch 2, wobei es sich bei der Schaufel um eine zu reparierende Schaufel (25) handelt, die eine beschädigte Erosionsschutzfolie (26) aus einem thermoplastischen Polymer umfasst, die auf den Schaufelkörper geklebt ist, wobei mindestens ein Abschnitt, der sich in der Nähe der Spitze (20) des Schaufelkörpers befindet, beschädigt ist, und wobei dem Schritt a) ein Vorgang zum Entfernen mindestens des beschädigten Abschnitts der beschädigten Schutzfolie (26) vorausgeht.

4. Verfahren nach Anspruch 3, wobei die zu reparierende Schaufel mit einer Schicht aus Erosionsschutzfarbe bedeckt ist, das Verfahren ferner vor dem Entfernen des beschädigten Abschnitts der beschädigten Schutzfolie einen Vorgang zum Entfernen dieser Schicht aus Erosionsschutzfarbe umfasst.

5. Schaufel nach Anspruch 1, oder Schutzverfahren nach einem der Ansprüche 2 bis 4, wobei die Schutzfolie mithilfe einer Schicht aus einem duroplastischen Polymer, die identisch mit dem duroplastischen Polymer der Verstärkungsschicht ist, auf den Schaufelkörper geklebt ist.

6. Schaufel nach Anspruch 1 oder 5 oder Schutzverfahren nach einem der Ansprüche 2 bis 4, wobei das duroplastische Polymer der Verstärkungsschicht identisch mit dem duroplastischen Polymer ist, das die organische Matrix der Schaufel bildet.

7. Turbomaschine, umfassend ein Gebläse mit einer Vielzahl von Schaufeln nach einem der Ansprüche 1, 5 und 6.

## Claims

1. A turbomachine blade, comprising:
- a blade body (15) of fiber-reinforced organic matrix composite material, the blade body having a pressure side (16) and a head (19) provided with an apex (20);
- an erosion protective film (22) of a thermoplastic polymer, bonded to the blade body; the blade further comprises, on its head (19), a reinforcing layer (23) made of a thermosetting polymer, positioned on the erosion protective film (22), being **characterized in that** the thermosetting polymer of the reinforcing layer being an epoxy resin, and **in that** the reinforcing layer (23) extends along the apex (20) in strip form and wherein the erosion protective film (22) and the reinforcing layer (23) are disposed only on the pressure side (16) of the blade body.

2. A method for protecting a turbomachine blade against erosion, the blade comprising a blade body (15) of fiber-reinforced organic matrix composite material, the body having a pressure side (16) and a head (19) provided with an apex (20), the method comprising the following successive steps of:
a) assembling, by bonding, an erosion protective film (22) of a thermoplastic polymer on the blade body;
b) applying a reinforcing layer (23) made of a thermosetting polymer on the head (19) of the blade body, so that the reinforcing layer (23) is positioned on the protective film (22), the thermosetting polymer of the reinforcing layer (23) being an epoxy resin and in that the reinforcing layer (23) extends along the apex (20) in strip form and wherein the protective film (22) and the reinforcing layer (23) are disposed only on the pressure side (16) of the blade body;
c) possibly applying an anti-erosion paint layer (27) on the blade body, in order to cover the protective film (22) and the reinforcing layer (23).

3. The method according to claim 2, wherein the blade is a blade to be repaired (25) comprising a damaged erosion protective film (26) of a thermoplastic polymer, bonded to the blade body, at least a portion of which located near the apex (20) of the blade body is damaged, and wherein step a) is preceded by an operation of removing at least the damaged portion of the damaged erosion protective film (26).

4. The method according to claim 3, wherein the blade to be repaired (25) is covered with an anti-erosion paint layer, the method further comprises, prior to the operation of removing said at least one damaged portion of the damaged erosion protective film (26), an operation of removing the anti-erosion paint layer.

5. The blade according to claim 1, or the method for protecting according to any one of claims 2 to 4, wherein the erosion protective film is bonded to the blade body with a layer of a thermosetting polymer which is identical to the thermosetting polymer of the reinforcing layer.

6. The blade according to claim 1 or 5, or the method for protecting according to any one of claims 2 to 4, wherein the thermosetting polymer of the reinforcing layer is identical to the thermosetting polymer forming the organic matrix of the blade.

7. A turbomachine comprising a fan including a plurality of blades according to any one of claims 1, 5 and 6.
